# EUROPEAN PATENT APPLICATION

(11) **EP 1 548 469 A1**
(43) Date of publication of application: **29.06.2005**
(21) Application number: 03799113.0
(22) Date of filing: 19.09.2003
(51) Int. Cl.: G02B 1/10, G09F 9/00, H01J 29/89

(54) **ANTI-REFLECTION FILM**

(30) Priority: 02.10.2002 JP 2002290168; 02.10.2002 JP 2002290169; 02.10.2002 JP 2002290170; 31.10.2002 JP 2002318349
(71) Applicant: Bridgestone Corporation, Tokyo 104-8340 (JP)
(72) Inventor: Nishida, M., Techn. Center, Bridgestone Corp., Tokyo 187-0031 (JP); Ohno, S., Techn. Center, Bridgestone Corp., Tokyo 187-0031 (JP); Yoshikawa, M., Techn. Center, Bridgestone Corp., Tokyo 187-0031 (JP); Kato, N., Techn. Center, Bridgestone Corp., Tokyo 187-0031 (JP)
(74) Representative: Whalley, Kevin
(86) International application number: PCT/JP2003/011969
(87) International publication number: WO 2004/031813

(57) **Abstract**

An antireflective film includes a base film, a hard coat layer provided on the base film, a layer having a relatively high refractive index and provided on the hard coat layer, and an outermost layer having a low refractive index and provided on the layer having the relatively high refractive index. In the antireflective film, the layer disposed adjacent to the outermost layer has a light-absorbing property. The layer disposed adjacent to the outermost layer includes carbon black, titanium black, fine metal particles, or an organic dye. The attenuation coefficient k at light having a wavelength of 550 nm of the layer disposed adjacent to the outermost layer is represented by 0.1<k<5.

## Description

### BACKGROUND OF THE INVENTION

### 1. Field of the Invention

The present invention relates to an antireflective film formed by coating used in the display field such as a cathode-ray tube (CRT) screen, a plasma display panel (PDP) screen, and a liquid crystal display (LCD) screen.

### 2. Description of the Related Art

When outside light, illuminating light, or a surrounding light landscape is reflected on the surface of, for example, a CRT screen to cause an image to be generated, the visibility of the screen is impaired. Accordingly, in order to suppress such a reflection, an antireflective treatment for reducing the reflection by optical interference is often performed. For example, fine irregularities are formed on the display surface as an antiglare treatment. Alternatively, a thin film is coated on the display surface. Such an antireflective treatment directly performed on the display surface increases the cost. Therefore, according to a recent major method, a film on which an antireflective treatment is performed is applied on the display surface.

According to a known antireflective film formed by coating, a hard coat layer, a high refractive index layer, and a low refractive index layer, in that order, are laminated on the surface of a transparent base film composed of a synthetic resin. Such an antireflective film is mainly used.

Specifically, the known antireflective film includes a base film, a hard coat layer disposed on the base film, and an antireflective layer disposed on the hard coat layer. The base film is composed of an organic film. The hard coat layer is composed of, for example, an acrylic resin or a siloxane and serves as a hard protective layer. The antireflective film is attached on the display surface with an adhesive.

In order to control the minimum reflectance of the antireflective film to zero, for example, when the refractive index of the high refractive index layer at 550 nm is 1.68, the refractive index of the low refractive index layer must be controlled to about 1.37. In order to control the refractive index of the low refractive index layer to about 1.37, a large amount of fluorocarbon resin having a low refractive index must be added to the outermost low refractive index layer. In such a case, the softness of the fluorocarbon resin significantly decreases the abrasion resistance of the antireflective film. For example, the low refractive index layer is easily removed by only rubbing with a plastic eraser.

A silicone resin may be used in order to improve the abrasion resistance of the outermost layer. In such a case, however, it is difficult to control the refractive index to 1.47 or less. Also, the use of silicone resin deteriorates the antireflective performance, and in addition, significantly decreases the chemical resistance, in particular, the alkali resistance.

In addition to the excellent antireflective performance, it is desired that an antireflective film used for the CRT display has an antistatic function against static electricity due to the charging on the display surface or weak electromagnetic waves radiated from the display surface. Therefore, the surface resistivity of the antireflective film must be as low as 1×10⁸ Ω/square or less. Furthermore, in terms of an industrial product, a low cost is always desirable.

The deposition of the antireflective layer of an antireflective film by a dry process such as sputtering significantly increases the production cost. Therefore, an antireflective film formed by coating is preferably used in terms of the cost. However, in the antireflective film formed by coating, the use of a material that does not absorb the visible light impairs the antireflective performance such as the minimum reflectance and the luminous reflectance. Accordingly, a light-absorbing layer must be formed. However, since the formation of the light-absorbing layer having a large thickness significantly decreases the light transmittance, the light-absorbing layer must be an ultrathin film having a very small thickness of 100 nm or less. Consequently, even when conductive particles composed of, for example, carbon or titanium nitride are used in the light-absorbing layer, the resultant antireflective film has a surface resistivity of at least 1×10⁹ Ω/square. Unfortunately, such an antireflective film cannot be used for the CRT display.

### SUMMARY OF THE INVENTION

Accordingly, it is a first object of the present invention to provide an antireflective film having a low reflectance and an excellent abrasion resistance.

It is a second object of the present invention to provide an inexpensive antireflective film formed by coating, the antireflective film having an excellent antireflective performance, and in addition, a preferable surface resistivity that is suitable for the application to the CRT display.

According to an antireflective film of a first embodiment, in an antireflective film including a base film and a plurality of thin films coated on the base film, a layer disposed adjacent to the outermost layer that is disposed farthest from the base film has a light-absorbing property.

The antireflective film of the first embodiment has a low reflectance and an excellent abrasion resistance.

In order to improve the abrasion resistance and the chemical resistance of an antireflective film, preferably, the outermost layer is composed of an acrylic resin having a significantly high crosslinking density and includes fine silica particles. In such a layer structure, however, the refractive index n of the outermost layer is about 1.48 to about 1.53, which is not very low.

However, the present inventor has found the following phenomenon: Even when the outermost layer does not have such a very low refractive index, the antireflective performance of the antireflective film can be significantly improved by controlling the attenuation coefficient k at 550 nm of the layer disposed adjacent to the outermost layer to k>0.1. For example, even when an outermost layer having a refractive index n of 1.49 is used, the minimum reflectance can be controlled to zero by controlling the attenuation coefficient k of the layer disposed adjacent to the outermost layer to k>0.39. The attenuation coefficient k of the layer disposed adjacent to the outermost layer is preferably represented by k≥0.2.

When the layer disposed adjacent to the outermost layer is an absorbing layer having a light-absorbing property, the luminous reflectance can also be significantly decreased.

When the layer disposed adjacent to the outermost layer includes conductive fine particles, the attenuation coefficient k of the layer is increased, and in addition, an antistatic property due to the electrical conductivity can be provided to the antireflective film.

According to an antireflective film of a second embodiment, an antireflective film includes a transparent base film, a hard coat layer laminated on the transparent base film, a transparent conductive layer laminated on the hard coat layer, a light-absorbing layer laminated on the transparent conductive layer, and a low refractive index layer laminated on the light-absorbing layer. In the antireflective film, the hard coat layer, the transparent conductive layer, the light-absorbing layer, and the low refractive index layer are formed by coating.

The antireflective film of the second embodiment is produced as follows: The hard coat layer is coated on the transparent base film. The transparent conductive layer is coated on the hard coat layer in order to maintain a very low surface resistivity. The light-absorbing layer is coated on the transparent conductive layer. The low refractive index layer is then coated on the light-absorbing layer. The formation of the transparent conductive layer can significantly increase the electrical conductivity of the antireflective film formed by coating. The formation of the light-absorbing layer can significantly decrease the minimum reflectance and the luminous reflectance. Furthermore, this structure can provide the low refractive index layer with abrasion resistance.

In the second embodiment, the hard coat layer preferably has a film thickness of 2 to 20 µm.

The transparent conductive layer is preferably composed of a cured acrylic binder resin including at least one kind of fine particles selected from the group consisting of antimony-doped tin oxide (ATO), ZnO, Sb₂O₅, SnO₂, indium tin oxide (ITO), and In₂O₃ particles. The transparent conductive layer preferably has a thickness of 0.3λ to 0.6λ of light having a wavelength of 550 nm and a refractive index of 1.58 to 1.75 to the light having a wavelength of 550 nm. Thus, the transparent conductive layer is formed so as to have a relatively large thickness. As a result, a surface resistivity of 1×10⁸ Ω/square or less can be achieved. In particular, when the transparent conductive layer is formed so as to have a thickness of 0.3λ to 0.6λ of light having a wavelength λ of 550 nm, the reflection spectrum becomes flat to further decrease the luminous reflectance.

The light-absorbing layer is preferably composed of a cured acrylic binder resin including at least one kind of fine particles selected from the group consisting of metal oxide particles, metal nitride particles, and carbon particles. The attenuation coefficient of the light-absorbing layer at light having a wavelength of 550 nm is preferably more than 0.25. The light-absorbing layer preferably has a thickness of 0.25λ or less of the light having a wavelength of 550 nm. Such a light-absorbing layer can provide a significantly excellent antireflective performance.

The attenuation coefficient of the low refractive index layer at light having a wavelength of 550 nm is preferably about zero. The low refractive index layer preferably has a refractive index of 1.38 to 1.55 to the light having a wavelength of 550 nm.

According to the antireflective film of the second embodiment, the surface resistivity is preferably 1.0×10⁸ Ω/square or less and the luminous reflectance is preferably 0.5% or less. According to the second embodiment, an antireflective film having both excellent antireflective performance and high antistatic performance can be provided at a low cost.

### BRIEF DESCRIPTION OF THE DRAWINGS

Fig. 1 is a schematic cross-sectional view showing an example of an antireflective film according to a first embodiment; and
Fig. 2 is a schematic cross-sectional view showing an example of an antireflective film according to a second embodiment.

### DESCRIPTION OF THE PREFERRED EMBODIMENTS

An antireflective film according to a first embodiment includes a transparent base film and a plurality of thin films coated on the surface of the base film, wherein a layer disposed adjacent to the outermost layer has a light-absorbing property.

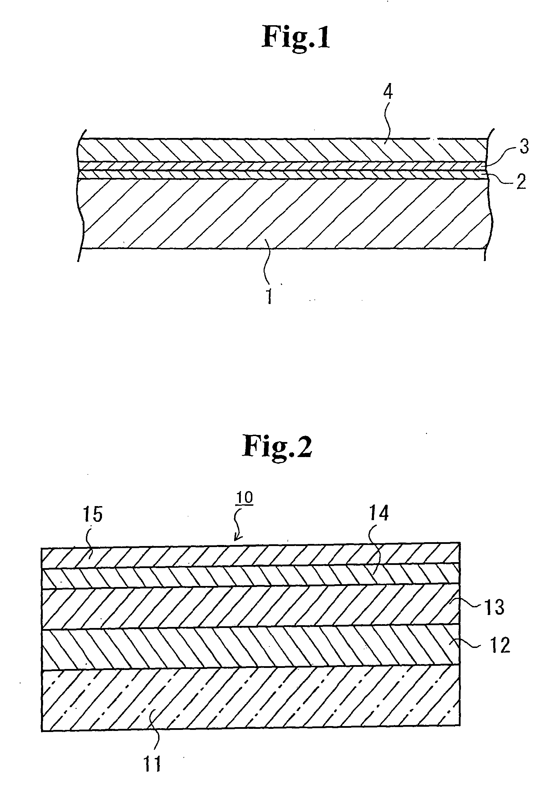

The number of the layers forming the thin films is preferably 2 to 5, in particular, 3 to 5. Preferably, as shown in Fig. 1, a hard coat layer 2 is provided on a transparent base film 1, a layer 3 having an absorbing property and a relatively high refractive index is provided on the hard coat layer 2, and an outermost layer 4 having a relatively low refractive index is provided on the layer 3.

The base film 1 is composed of, for example, polyesters, polyethylene terephthalate (PET), polybutylene terephthalate, polymethylmethacrylate (PMMA), acrylics, polycarbonate (PC), polystyrene, cellulose triacetate (TAC), polyvinyl alcohol, polyvinyl chloride, polyvinylidene chloride, polyethylene, ethylene-vinyl acetate copolymer, polyurethanes, and cellophane. Preferable examples include a transparent film composed of PET, PC, or PMMA.

The thickness of the base film 1 is appropriately determined according to required characteristics (for example, the strength and the thin film performance) depending on the application of the resultant antireflective film. The thickness of the base film 1 is generally in the range of 1 µm to 10 mm.

The hard coat layer 2 is preferably composed of a synthetic resin. Ultraviolet or electron beam-curing synthetic resins, in particular, multifunctional acrylic resins are preferably used. The hard coat layer 2 preferably has a thickness of 2 to 20 µm.

According to the first embodiment, the layer 3 disposed adjacent to the outermost layer may be composed of a synthetic resin containing fine particles to provide the light-absorbing property.

The fine particles may be at least one kind of particles selected from carbon black, fullerene, and titanium black particles. The addition of carbon black or fullerene provides not only the absorbing property but also the antistatic performance (i.e., electrical conductivity). Regarding titanium black, the addition of even a small amount of titanium black can increase the absorbing property.

The fine particles may be composed of a metal. Examples of the fine metal particles include noble metal particles, in particular, at least one of gold (Au) particles and silver (Ag) particles. In terms of corrosion resistance, gold particles are most preferable. Because of the electrical conductivity, the addition of fine metal particles provides the antireflective film with not only the absorbing property but also the antistatic performance. The ratio of the fine particles to the synthetic resin in the layer 3 is determined so as to have the above absorbing property. The ratio of the fine particles to the total amount of the fine particles and the synthetic resin is generally 0.1 to 60 volume percent, preferably, 45 to 55 volume percent, and more preferably, 47 to 52 volume percent.

The layer 3 disposed adjacent to the outermost layer may be composed of a synthetic resin containing an organic dye to provide the light-absorbing property. The organic dye used in the layer 3 has a light-absorbing property at about 550 nm and can be evenly dispersed or mixed in the synthetic resin.

In addition to the organic dye, the layer 3 disposed adjacent to the outermost layer may include conductive fine particles. The addition (dispersion) of conductive fine particles increases the light-absorbing property of the layer disposed adjacent to the outermost layer. Furthermore, because of the electrical conductivity, the addition (dispersion) of conductive fine particles provides the antireflective film with the antistatic performance. Examples of the conductive fine particles include conductive fine metal oxide particles composed of, for example, ZnO, indium tin oxide (ITO), antimony-doped tin oxide (ATO), and SbO₂; and conductive carbon black.

In the layer 3 disposed adjacent to the outermost layer, the content of the organic dye or the conductive fine particles is determined so as to have the above absorbing property. The content (i.e., the amount to be added) of the organic dye is preferably about 1 to about 50 volume percent. When the layer 3 includes both organic dye and conductive fine particles, the ratio of the conductive fine particles to the total amount of the conductive fine particles and the synthetic resin is generally 55 volume percent or less, preferably, 45 to 55 volume percent, and more preferably, about 45 to about 52 volume percent.

Regarding the absorbing property, the attenuation coefficient k at a wavelength of 550 nm preferably satisfies 0.1<k<5. Preferably, the attenuation coefficient k satisfies 0.2<k, in particular, 0.39<k.

The complex refractive index N of the layer 3 disposed adjacent to the outermost layer is represented as N=n-ik wherein i represents the imaginary unit. In this formula, n (the real part of the refractive index) is preferably 1.45 to 1.85, more preferably, 1.45 to 1.65.

The layer 3 disposed adjacent to the outermost layer is composed of a synthetic resin, preferably an ultraviolet or electron beam-curing synthetic resin. Examples of the synthetic resin preferably include acrylic resins, epoxy resins, and styrene resins. In particular, acrylic resins are most preferably used.

The thickness of the layer 3 disposed adjacent to the outermost layer is preferably 30 to 80 nm, more preferably, about 40 to about 75 nm.

Preferably, the outermost layer 4 having a relatively low refractive index is also composed of a synthetic resin, in particular, an ultraviolet or electron beam-curing synthetic resin.

According to the antireflective film of the first embodiment, the layer 3 disposed adjacent to the outermost layer has the absorbing property. Therefore, even when the outermost layer 4 is not composed of a material having a sufficiently low refractive index, an antireflective film having a high antireflective performance can be readily provided. For example, even when the outermost layer 4 is composed of a material having a refractive index n of about 1.45, an antireflective film having the minimum reflectance of 1% or less in the surface reflectance can be readily provided. The outermost layer 4 is preferably composed of an acrylic resin (refractive index n=1.51) because acrylic resins are inexpensive and excellent in, for example, chemical resistance, weather resistance, durability, and adhesiveness. Alternatively, when a fluorine-containing acrylic resin or a silicone resin is used as the material of the outermost layer 4, an antireflective film having a significantly excellent antireflective performance, in other words, having the minimum reflectance of 0.5% or less in the surface reflectance, can be provided. The refractive index n of the outermost layer 4 is preferably 1.52 or less, more preferably, 1.40 to 1.52, and most preferably, 1.42 to 1.48.

In order to decrease the refractive index and to improve the abrasion resistance and the slippage, the outermost layer 4 preferably includes about 10 to about 40 weight percent of fine particles composed of, for example, silica or a fluorocarbon resin. In particular, in order to improve the abrasion resistance and the chemical resistance, the outermost layer 4 preferably includes fine silica particles. The outermost layer 4 preferably has a thickness of 60 to 100 nm.

The attenuation coefficient k of the outermost layer 4 preferably satisfies k<0.01, in particular, k=0.

In the first embodiment, in order to form the hard coat layer 2, the layer 3, and the outermost layer 4 on the base film 1, preferably, uncured synthetic resins (containing the above fine particles and/or the dye according to need) are coated and are then irradiated with ultraviolet rays or an electron beam. In such a case, each time after the layer 2, 3, or 4 is coated, curing may be performed. Alternatively, after the three layers are coated, all layers may be cured at the same time.

An example of a specific method for coating is as follows: An acrylic monomer is dissolved in a solvent such as toluene to prepare a coating solution. The solution is coated on a film with, for example, a gravure coater. The film is dried and is then cured by irradiating ultraviolet rays or an electron beam. According to this wet coating method, an even film can be inexpensively formed at a high speed. As described above, after the coating, the coated solution is cured by irradiating, for example, ultraviolet rays or an electron beam. This step provides advantages such as the improvement in the adhesiveness and the increase in the hardness of the film.

This coating method can be performed significantly inexpensively, compared with sputtering or vapor deposition.

The antireflective film according to the first embodiment can be applied to, for example, a front filter of a PDP or a liquid crystal plate of office automation equipment, or a window material of vehicles and special buildings.

The first embodiment will now be described more specifically with reference to Examples and Comparative examples.

### EXAMPLES 1 to 3, COMPARATIVE EXAMPLES 1 and 2

An acrylic resin coating film serving as a hard coat layer 2 was formed on a PET film (refractive index 1.65) having a thickness of 188 µm by the above coating method (i.e., wet coating method) and was then dried. The refractive index of the hard coat layer was 1.51. A film serving as a layer 3 (i.e., high refractive index layer) disposed adjacent to the outermost layer was formed on the hard coat layer and was then dried in the same way. The layer 3 was formed using a coating solution including a multifunctional acrylic resin and fine particles. Table 1 shows the composition of the coating solutions. Furthermore, a coating film serving as the outermost layer 4 (i.e., low refractive index layer) was formed and was then dried. Table 1 also shows the composition of coating solutions used for the outermost layer 4. As shown in Table 1, the layer 3 included a multifunctional acrylic resin and the following fine particles. In Example 1, carbon black particles were mixed with the acrylic resin. In Example 2, carbon black and titanium black particles were mixed with the acrylic resin. In Example 3, metal particles (gold particles, average particle diameter 7 nm) were mixed with the acrylic resin. In Comparative examples 1 and 2, ITO particles (average particle diameter 60 nm) were mixed with the acrylic resin. The mixing ratio is shown in Table 1.

In Comparative example 1 and Examples 1 to 3, the outermost layer 4 included the multifunctional acrylic resin (60 parts by weight) and fine silica particles (40 parts by weight). In Comparative example 2, the outermost layer 4 included the multifunctional acrylic resin (20 parts by weight) and a fluorocarbon resin (80 parts by weight).

Subsequently, each resultant PET film was irradiated with ultraviolet rays to cure the acrylic resin. Thus, an antireflective film was produced. The antireflective film included a hard coat layer having a thickness of about 5 µm, the layer disposed adjacent to the outermost layer having a thickness of about 80 nm, and the outermost layer having a thickness of about 95 nm.

### EXAMPLE 4

In Example 4, a layer 3 disposed adjacent to the outermost layer included the multifunctional acrylic resin (25 parts by weight), carbon black particles (50 parts by weight), and an organic dye (KAYASET Blue A-D from Nippon Kayaku Co., Ltd., 25 parts by weight). Other compositions were the same as those in Examples 1 to 3.

Table 1 also shows the values of n and k in the complex refractive index N=n-ik of the layer disposed adjacent to the outermost layer and the outermost layer according to the above Examples and Comparative examples.

In the antireflective films of the above Examples and Comparative examples, the minimum reflectance of the surface reflectance was measured. Table 1 shows the result.

The chemical resistance of the antireflective films was evaluated as follows: Each antireflective film was immersed in an aqueous solution of NaOH (3 weight percent) for 30 minutes. Furthermore, each antireflective film was immersed in an aqueous solution of HCl (3 weight percent) for 30 minutes. Subsequently, the chemical resistance was checked by visual inspection. Table 1 shows the result. In Table 1, the word good represents that the color of the reflected light did not change and the word poor represents that the color of the reflected light changed.

The abrasion resistance of the antireflective films was evaluated as follows: Each antireflective film was rubbed with a commercially available plastic eraser back and forth for 100 times. The change in the appearance was checked by visual observation. Table 1 shows the result. In Table 1, the word good represents that the appearance did not change and the word poor represents that appearance changed.

### COMPARATIVE EXAMPLE 3

An antireflective film was produced as in Comparative examples 1 and 2 except that the outermost layer was composed of a silicone resin (that did not contain fine particles). The measurement and evaluations were performed in the same way. Table 1 shows the results.

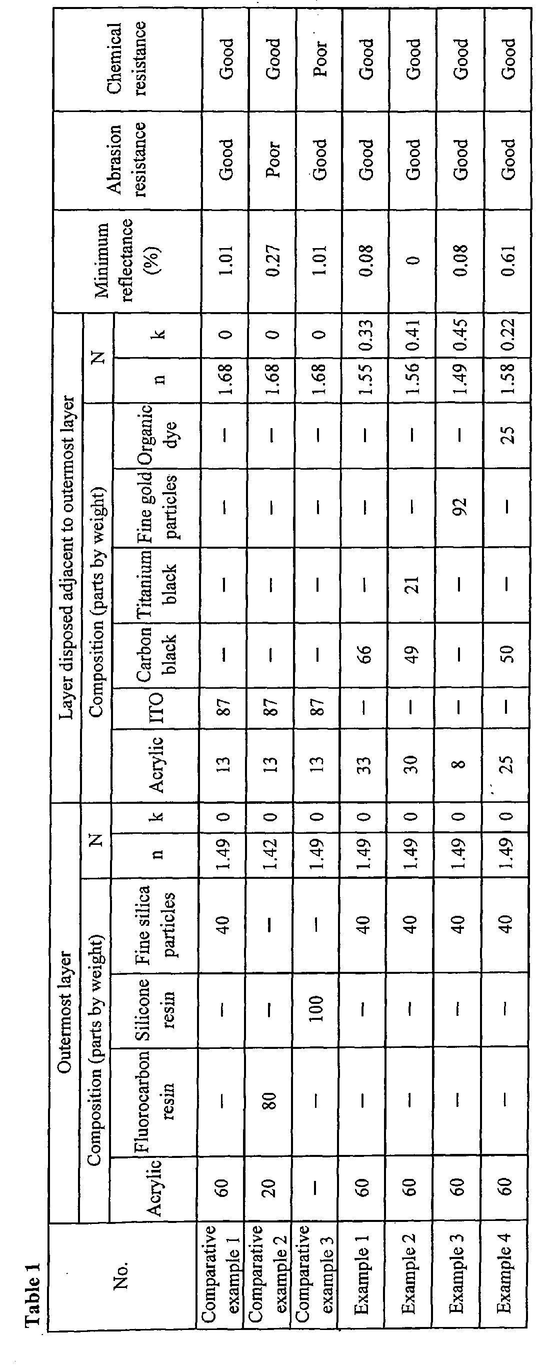

The antireflective film in Comparative example 1 was a normal transparent antireflective film formed by coating and had a high minimum reflectance.

In Comparative example 2, in order to decrease the minimum reflectance, a low refractive index layer including a fluorocarbon resin was used as the outermost layer. Although this antireflective film in Comparative example 2 had a low minimum reflectance, the abrasion resistance of the antireflective film was poor.

In Comparative example 3, the silicone resin was used as the outermost layer. According to the antireflective film in Comparative example 3, the minimum reflectance was not decreased that much, and in addition, the chemical resistance (alkali resistance) was poor.

In Example 1, carbon black particles were mixed in the layer disposed adjacent to the outermost layer. The antireflective film in Example 1 had a very low minimum reflectance and satisfied all performances.

In Example 2, carbon black and titanium black particles were mixed in the layer disposed adjacent to the outermost layer. The minimum reflectance of the antireflective film in Example 2 can be reduced to as low as zero.

In Example 3, fine gold particles (average particle diameter 7 nm) were mixed in the layer disposed adjacent to the outermost layer. The antireflective film in Example 3 had a very low minimum reflectance and satisfied all performances.

In Example 4, the organic dye and carbon black particles were mixed in the layer disposed adjacent to the outermost layer. The antireflective film in Example 4 had a very low minimum reflectance and satisfied all performances.

The antireflective films in the above Examples and Comparative examples showed the good antistatic performance.

As described above in detail, according to the first embodiment, the selection of the material that provides an excellent antireflective performance and can be used as the low refractive index layer can be increased. Furthermore, an antireflective film having excellent antireflective performance and abrasion resistance can be provided at a low cost using an acrylic resin, which is inexpensive and has excellent chemical resistance, adhesiveness, and weather resistance, as the outermost layer.

A second embodiment will now be described with reference to Fig. 2. Fig. 2 is a cross-sectional view showing an example of an antireflective film according to the second embodiment.

A hard coat layer 12, a transparent conductive layer 13, a light-absorbing layer 14, and a low refractive index layer 15, in that order, are laminated on a transparent base film 11 by coating to form an antireflective film 10.

The transparent base film 11 is composed of, for example, polyesters, polyethylene terephthalate (PET), polybutylene terephthalate, polymethylmethacrylate (PMMA), acrylics, polycarbonate (PC), polystyrene, triacetates, polyvinyl alcohol, polyvinyl chloride, polyvinylidene chloride, polyethylene, ethylene-vinyl acetate copolymer, polyurethanes, and cellophane. Preferable examples include a transparent film composed of PET, PC, or PMMA.

The thickness of the transparent base film 11 is appropriately determined according to required characteristics (for example, the strength and the thin film performance) depending on the application of the resultant antireflective film. The thickness of the transparent base film 11 is generally in the range of 1 µm to 10 mm.

The hard coat layer 12 disposed on the transparent base film 11 can be formed by coating a normal hard coat agent composed of, for example, an acrylic resin or a silicone resin. According to need, about 0.05 to about 5 weight percent of a known ultraviolet absorber may be mixed in the hard coat layer 12 to provide an ultraviolet-cutting property. The hard coat layer 12 preferably has a film thickness of about 2 to about 20 µm.

The transparent conductive layer 13 disposed on the hard coat layer 12 is preferably formed as follows: At least one kind of conductive fine particles selected from the group consisting of antimony-doped tin oxide (ATO), ZnO, Sb₂O₅, SnO₂, indium tin oxide (ITO), and In₂O₃ particles are mixed with a binder resin such as an acrylic resin to prepare a coating solution. The coating solution is coated on the hard coat layer 12 formed on the transparent base film 11. The resultant coated film is cured with heat or light, preferably with light.

In this coating solution, the mixing ratio of the conductive fine particles to the binder resin is appropriately determined according to, for example, the refractive index of the transparent conductive layer 13 to be formed. The transparent conductive layer 13 preferably has a refractive index n of 1.58 to 1.75 at light having a wavelength of 550 nm by adequately controlling the mixing ratio of the conductive fine particles to the binder resin.

The film thickness of the transparent conductive layer 13 is preferably at least 0.25λ, more preferably, 0.3λ to 0.6λ, most preferably, 0.3λ to 0.55λ of the light having a wavelength of 550 nm. When the film thickness of the transparent conductive layer 13 is smaller than the above range, a sufficient conductive property cannot be provided. Consequently, the resultant antireflective film has a high surface resistivity. On the other hand, an excessively large thickness of the transparent conductive layer 13 significantly deteriorates the optical performance (i.e., antireflective performance).

The conductive fine particles used in the transparent conductive layer 13 preferably have an average particle diameter of 5 to 100 nm.

The light-absorbing layer 14 disposed on the transparent conductive layer 13 is preferably formed as follows: At least one kind of light-absorbing fine particles selected from the group consisting of metal oxide particles, metal nitride particles, and carbon particles are mixed with a binder resin such as an acrylic resin to prepare a coating solution. The coating solution is coated on the transparent conductive layer 13. The resultant coated film is cured with heat or light, preferably with light.

The mixing ratio of the light-absorbing fine particles to the binder resin in this coating solution is appropriately determined according to, for example, the attenuation coefficient of the light-absorbing layer 14 to be formed. The mixing ratio of the light-absorbing fine particles to the binder resin is appropriately controlled in the following range: light-absorbing fine particles : binder resin = 50 to 1,000 : 100 (by weight) Thus, the light-absorbing layer 14 having an attenuation coefficient k of more than 0.25, in particular, k=0.3 to 0.5 at light having a wavelength of 550 nm is preferably formed. When the attenuation coefficient k of the light-absorbing layer 14 is 0.25 or less, a sufficient antireflective performance cannot be provided. An excessively large attenuation coefficient k also deteriorates the antireflective performance.

The film thickness of the light-absorbing layer 14 is preferably up to 0.25λ, more preferably, 0.12λ to 0.22λ of the light having a wavelength of 550 nm. When the film thickness of the light-absorbing layer 14 is larger than the above range, the transmittance is decreased. On the other hand, an excessively small thickness of the light-absorbing layer 14 cannot provide a sufficient antireflective performance.

Examples of the fine metal oxide particle in the light-absorbing layer 14 include titanium oxide particles. Examples of the fine metal nitride particle in the light-absorbing layer 14 include titanium nitride particles. For example, titanium black, which is a mixture of both compounds, is preferably used. The light-absorbing fine particles preferably have an average particle diameter of 5 to 100 nm.

The low refractive index layer 15 disposed on the light-absorbing layer 14 preferably has an attenuation coefficient k of about zero at light having a wavelength of 550 nm. The low refractive index layer 15 preferably has a refractive index n of 1.38 to 1.55. When the refractive index n of the low refractive index layer 15 is less than 1.38, the strength of the film is significantly decreased. When the refractive index n of the low refractive index layer 15 exceeds 1.55, the antireflective performance is deteriorated.

In terms of the abrasion resistance, a low refractive index layer 15 composed of a fluorine-containing acrylic resin cannot provide an excellent antireflective film. Therefore, the low refractive index layer 15 is preferably composed of a silica-containing acrylic resin, which provides an excellent abrasion resistance. For example, the low refractive index layer 15 is preferably formed as follows: A coating solution containing fine silica particles and an acrylic binder resin is coated on the light-absorbing layer 14. The resultant coated film is cured with heat or light, preferably with light.

The mixing ratio of the fine silica particles to the binder resin in the coating solution is appropriately determined according to, for example, the refractive index of the low refractive index layer 15 to be formed. The mixing ratio of the fine silica particles to the binder resin is appropriately controlled in the following range: fine silica particles : binder resin = 20 to 400 : 100 (by weight) Thus, the low refractive index layer 15 that satisfies the above refractive index is preferably formed.

The film thickness of the low refractive index layer 15 is preferably 0.10λ to 0.20λ of the light having a wavelength of 550 nm. When the film thickness of the low refractive index layer 15 is smaller than the above range, the antireflective performance is deteriorated. An excessively large thickness of the low refractive index layer 15 also deteriorates the antireflective performance.

The fine silica particles used in the low refractive index layer 15 preferably have an average particle diameter of 5 to 20 nm.

The antireflective film according to the second embodiment has a luminous reflectance of 0.5% or less to provide an excellent antireflective performance. In addition, the antireflective film has a low surface resistivity of 1×10⁸ Ω/square or less, furthermore, 9×10⁷ Ω/square or less to provide an excellent antistatic performance. Therefore, in particular, the antireflective film according to the second embodiment can be preferably used as an antireflective film for a CRT screen. However, the application of this antireflective film is not limited to the antireflective film for a CRT screen. The antireflective film is useful in, for example, a plasma television and a liquid crystal television.

The second embodiment will now be described more specifically with reference to Examples and Comparative examples.

The following particles were used in the following Examples and Comparative examples. Fine ITO particles had an average particle diameter of 50 nm. Fine carbon particles had an average secondary particle diameter of 100 nm. Fine titanium black particles had an average particle diameter of 60 nm. Fine silica particles had an average particle diameter of 12 nm. The wavelength λ was 550 nm.

### EXAMPLE 5

A photo-curable acrylic hard coat agent (Z7501 from JSR Corporation) was applied on an easily adherable layer of a PET film (A4100 from Toyobo Co., Ltd.). The resultant PET film was irradiated with a high-pressure mercury lamp to cure the hard coat agent under the conditions of 200 ppm or less of the oxygen concentration and 500 mJ/cm² of the integrated light intensity. Thus, a hard coat layer having a thickness of 8 µm was formed.

A coating solution containing fine ITO particles and an acrylic binder (fine ITO particles : acrylic binder = 80 : 20 (by weight)) was coated on the hard coat layer. The resultant PET film was irradiated with the high-pressure mercury lamp to cure the coating solution under the conditions of 200 ppm or less of the oxygen concentration and 500 mJ/cm² of the integrated light intensity. Thus, a transparent conductive layer (film thickness=about 0.25λ, refractive index n=1.68, and attenuation coefficient k=0) was formed.

A coating solution containing fine carbon particles, fine titanium black particles, and an acrylic binder (fine carbon particles : fine titanium black particles : acrylic binder = 50 : 50 : 30 (by weight)) was coated on the transparent conductive layer. The resultant PET film was irradiated with the high-pressure mercury lamp to cure the coating solution under the conditions of 200 ppm or less of the oxygen concentration and 500 mJ/cm² of the integrated light intensity. Thus, a light-absorbing layer (film thickness=about 0.16λ and attenuation coefficient k=0.32) was formed.

A coating solution containing fine silica particles and an acrylic binder (fine silica particles : acrylic binder = 70 : 30 (by weight)) was coated on the light-absorbing layer. The resultant PET film was irradiated with the high-pressure mercury lamp to cure the coating solution under the conditions of 200 ppm or less of the oxygen concentration and 500 mJ/cm² of the integrated light intensity. Thus, a low refractive index layer (film thickness=about 0.18λ, refractive index n=1.49, and attenuation coefficient k=0) was formed.

The electrical conductivity, the abrasion resistance, the minimum reflectance, and the luminous reflectance of the above antireflective film were evaluated by the following methods. Table 2 shows the results.

### <Electrical conductivity>

The surface resistivity was measured with a resistivity meter (Hiresta UP from Mitsubishi Chemical Corporation) and was evaluated according to the following criterion.

Excellent: The surface resistivity is 8.0×10⁷ Ω/square or less. The electrical conductivity is excellent.

Good: The surface resistivity exceeds 8.0×10⁷ Ω/square and is up to 2×10⁸ Ω/square. The electrical conductivity is good.

Poor: The surface resistivity exceeds 2×10⁸ Ω/square.
The electrical conductivity is low.

### <Abrasion resistance>

The outermost surface of the antireflective film was rubbed with an eraser with a constant load. When no scratch was generated after the antireflective film was rubbed more than 50 times, the antireflective film was evaluated as good. When a scratch was generated after the antireflective film was rubbed 50 times or less, the antireflective film was evaluated as poor.

### <Minimum reflectance>

A black tape was applied on the back-side of the antireflective film. The minimum reflectance was measured with a spectrophotometer (from Hitachi, Ltd.) and was evaluated according to the following criterion.

Good: The minimum reflectance is 0.3% or less. The antireflective performance is good.

Fair: The minimum reflectance is 0.3% to 0.4%. The antireflective performance is somewhat poor.

Poor: The minimum reflectance is 0.4% or more. The antireflective performance is poor.

### <Luminous reflectance>

Good: The luminous reflectance is 0.5% or less. The antireflective performance is good.

Fair: The luminous reflectance is 0.5% to 0.6%. The antireflective performance is somewhat poor.

Poor: The luminous reflectance is 0.6% or more. The antireflective performance is poor.

### EXAMPLES 6 to 9

Antireflective films were produced as in Example 5 except that the film thickness of the transparent conductive layer was changed as shown in Table 2. The electrical conductivity, the abrasion resistance, the minimum reflectance, and the luminous reflectance were evaluated as in Example 5. Table 2 shows the results.

### EXAMPLE 10

A hard coat layer was formed on a PET film as in Example 5. Subsequently, a coating solution containing fine ITO particles and an acrylic binder (fine ITO particles : acrylic binder = 80 : 20 (by weight)) was coated on the hard coat layer. The resultant PET film was irradiated with a high-pressure mercury lamp to cure the coating solution under the conditions of 200 ppm or less of the oxygen concentration and 500 mJ/cm² of the integrated light intensity. Thus, a transparent conductive layer (film thickness=about 0.50λ, refractive index n=1.68, and attenuation coefficient k=0) was formed.

A coating solution containing fine carbon particles, fine titanium black particles, and an acrylic binder (fine carbon particles : fine titanium black particles : acrylic binder = 50 : 50 : 33 (by weight)) was coated on the transparent conductive layer. The resultant PET film was irradiated with the high-pressure mercury lamp to cure the coating solution under the conditions of 200 ppm or less of the oxygen concentration and 500 mJ/cm² of the integrated light intensity. Thus, a light-absorbing layer (film thickness=about 0.16λ and attenuation coefficient k=0.10) was formed.

A coating solution containing fine silica particles and an acrylic binder (fine silica particles : acrylic binder = 70 : 30 (by weight)) was coated on the light-absorbing layer. The resultant PET film was irradiated with the high-pressure mercury lamp to cure the coating solution under the conditions of 200 ppm or less of the oxygen concentration and 500 mJ/cm² of the integrated light intensity. Thus, a low refractive index layer (film thickness=about 0.25λ, refractive index n=1.49, and attenuation coefficient k=0) was formed.

The electrical conductivity, the abrasion resistance, the minimum reflectance, and the luminous reflectance of the above antireflective film were evaluated as in Example 5. Table 2 shows the results.

### EXAMPLE 11

A hard coat layer and a transparent conductive layer were formed on a PET film as in Example 10. Subsequently, a coating solution containing fine carbon particles, fine titanium black particles, and an acrylic binder (fine carbon particles : fine titanium black particles : acrylic binder = 50 : 50 : 65 (by weight)) was coated on the transparent conductive layer. The resultant PET film was irradiated with a high-pressure mercury lamp to cure the coating solution under the conditions of 200 ppm or less of the oxygen concentration and 500 mJ/cm² of the integrated light intensity. Thus, a light-absorbing layer (film thickness=about 0.16λ and attenuation coefficient k=0.20) was formed.

A coating solution containing fine silica particles and an acrylic binder (fine silica particles : acrylic binder = 70 : 30 (by weight)) was coated on the light-absorbing layer. The resultant PET film was irradiated with the high-pressure mercury lamp to cure the coating solution under the conditions of 200 ppm or less of the oxygen concentration and 500 mJ/cm² of the integrated light intensity. Thus, a low refractive index layer (film thickness=about 0.22λ, refractive index n=1.49, and attenuation coefficient k=0) was formed.

The electrical conductivity, the abrasion resistance, the minimum reflectance, and the luminous reflectance of the above antireflective film were evaluated as in Example 5. Table 2 shows the results.

### EXAMPLE 12

A hard coat layer and a transparent conductive layer were formed on a PET film as in Example 10. Subsequently, a coating solution containing fine carbon particles, fine titanium black particles, and an acrylic binder (fine carbon particles : fine titanium black particles : acrylic binder = 50 : 50 : 150 (by weight)) was coated on the transparent conductive layer. The resultant PET film was irradiated with a high-pressure mercury lamp to cure the coating solution under the conditions of 200 ppm or less of the oxygen concentration and 500 mJ/cm² of the integrated light intensity. Thus, a light-absorbing layer (film thickness=about 0.16λ and attenuation coefficient k=0.30) was formed.

A coating solution containing fine silica particles and an acrylic binder (fine silica particles : acrylic binder = 70 : 30 (by weight)) was coated on the light-absorbing layer. The resultant PET film was irradiated with the high-pressure mercury lamp to cure the coating solution under the conditions of 200 ppm or less of the oxygen concentration and 500 mJ/cm² of the integrated light intensity. Thus, a low refractive index layer (film thickness=about 0.21λ, refractive index n=1.49, and attenuation coefficient k=0) was formed.

The electrical conductivity, the abrasion resistance, the minimum reflectance, and the luminous reflectance of the above antireflective film were evaluated as in Example 5. Table 2 shows the results.

### COMPARATIVE EXAMPLE 4

An antireflective film was produced as in Example 5 except that the light-absorbing layer was not formed and the low refractive index layer was formed so as to have a thickness of about 0.25λ. The electrical conductivity, the abrasion resistance, the minimum reflectance, and the luminous reflectance were evaluated as in Example 5. Table 2 shows the results.

### COMPARATIVE EXAMPLE 5

An antireflective film was produced as in Example 5 except that the light-absorbing layer was not formed and the low refractive index layer was formed as follows. A fluorine-containing acrylic resin was coated on the transparent conductive layer. The resultant PET film was irradiated with a high-pressure mercury lamp to cure the acrylic resin under the conditions of 200 ppm or less of the oxygen concentration and 500 mJ/cm² of the integrated light intensity. Thus, a low refractive index layer (film thickness=about 0.25λ and refractive index n=1.44) was formed. The electrical conductivity, the abrasion resistance, the minimum reflectance, and the luminous reflectance were evaluated as in Example 5. Table 2 shows the results.

### COMPARATIVE EXAMPLE 6

An antireflective film was produced as in Example 5 except that the transparent conductive layer was not formed and the low refractive index layer was formed so as to have a thickness of about 0.2λ. The electrical conductivity, the abrasion resistance, the minimum reflectance, and the luminous reflectance were evaluated as in Example 5. Table 2 shows the results.

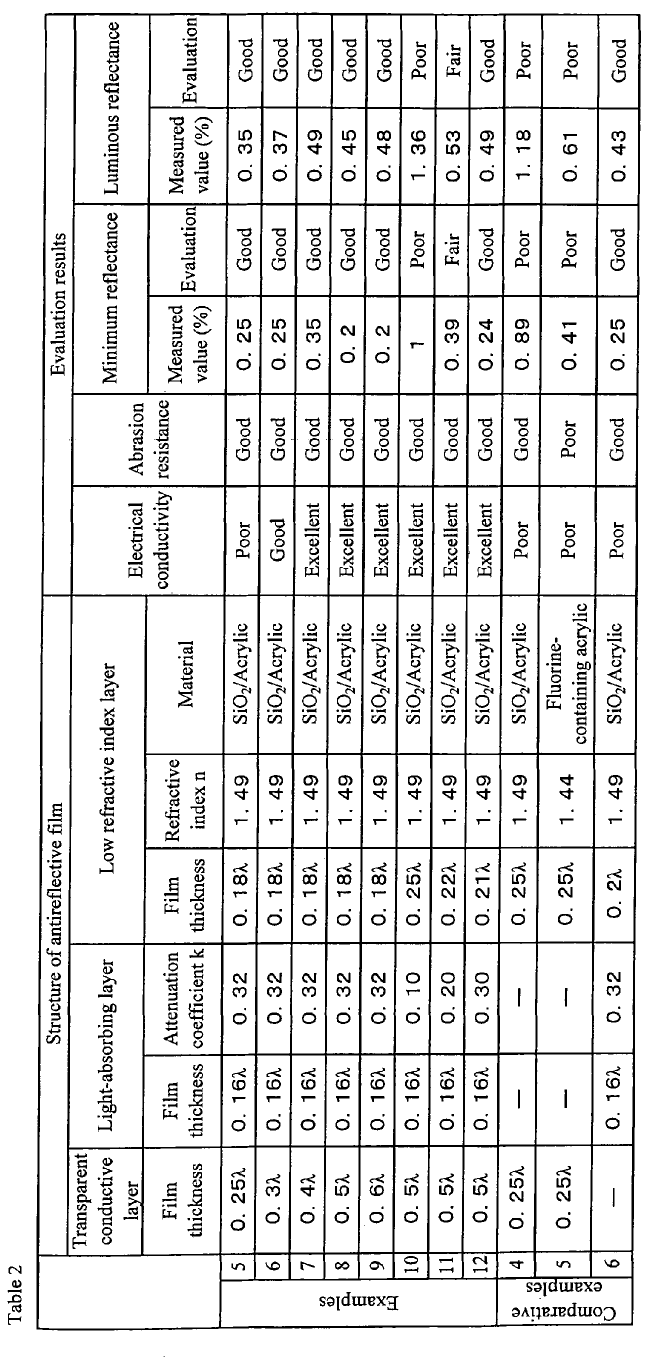

The following results are apparent from Table 2.

The antireflective films in Comparative examples 4 and 5, which do not include the light-absorbing layer, had a high minimum reflectance and a high luminous reflectance. According to the antireflective film in Comparative example 5, which includes the outermost low refractive index layer composed of the fluorine-containing acrylic resin, although the antireflective performance was improved, the abrasion resistance was significantly impaired. The electrical conductivity of the antireflective films in both Comparative examples 4 and 5 was poor.

Although the antireflective film in Comparative example 6, which does not include the transparent conductive layer, had a low minimum reflectance and a low luminous reflectance, the antireflective film had a poor electrical conductivity.

The antireflective films in Examples 5 to 9 included the transparent conductive layer and the light-absorbing layer. In Examples 5 to 9, the thickness of the transparent conductive layer was gradually increased to evaluate the change in the electrical conductivity. Since the attenuation coefficient k was as large as 0.32, all antireflective films showed a good antireflective performance. When the transparent conductive layer had a thickness of at least 0.3λ, the target surface resistivity of 1×10⁸ Ω/square or less can be achieved.

In Examples 10 to 12, the transparent conductive layer had a sufficient film thickness (0.5λ) and the ratio of the fine carbon particles and the fine titanium black particles in the light-absorbing layer to the acrylic binder was changed to evaluate the change in the antireflective performance. When the attenuation coefficient k of the light-absorbing layer was at least 0.25, a satisfactory antireflective performance can be provided in terms of the minimum reflectance and the luminous reflectance.

As described above in detail, according to the second embodiment, an antireflective film having a significantly excellent antireflective performance and antistatic performance can be provided by coating at a low cost.

## Claims

1. An antireflective film comprising:
a base film; and
a plurality of thin films coated on the base film,
wherein a layer disposed adjacent to the outermost layer that is disposed farthest from the base film has a light-absorbing property.

2. The antireflective film according to claim 1, wherein the attenuation coefficient k at a wavelength of 550 nm of the outermost layer is represented by k<0.01.

3. The antireflective film according to claim 1, wherein the attenuation coefficient k at a wavelength of 550 nm of the layer disposed adjacent to the outermost layer is represented by 0.1<k<5.

4. The antireflective film according to claim 3, wherein the layer disposed adjacent to the outermost layer comprises an organic resin in which fine particles are dispersed.

5. The antireflective film according to claim 4, wherein the fine particles are at least one kind of particles selected from the group consisting of carbon black, fullerene, and titanium black particles.

6. The antireflective film according to claim 1, wherein the layer disposed adjacent to the outermost layer comprises fine metal particles to provide the light-absorbing property.

7. The antireflective film according to claim 6, wherein the layer disposed adjacent to the outermost layer comprises an organic resin in which the fine metal particles are dispersed.

8. The antireflective film according to claim 6, wherein the fine metal particles are fine noble metal particles.

9. The antireflective film according to claim 8, wherein the noble metal is at least one of gold and silver.

10. The antireflective film according to claim 1, wherein the layer disposed adjacent to the outermost layer comprises an organic dye to provide the light-absorbing property.

11. The antireflective film according to claim 10, wherein the layer disposed adjacent to the outermost layer comprises an organic resin in which conductive fine particles are dispersed.

12. The antireflective film according to claim 11, wherein the conductive fine particles are at least one kind of particles selected from the group consisting of ZnO, indium tin oxide, antimony-doped tin oxide, SbO₂, and conductive carbon black particles.

13. The antireflective film according to claim 1, wherein the layer disposed adjacent to the outermost layer has a real part of the refractive index of 1.45 to 1.85.

14. The antireflective film according to claim 1, wherein the outermost layer has a refractive index of 1.40 to 1.52.

15. An antireflective film comprising:
a transparent base film;
a hard coat layer laminated on the transparent base film;
a transparent conductive layer laminated on the hard coat layer;
a light-absorbing layer laminated on the transparent conductive layer; and
a low refractive index layer laminated on the light-absorbing layer,
wherein the hard coat layer, the transparent conductive layer, the light-absorbing layer, and the low refractive index layer are formed by coating.

16. The antireflective film according to claim 15, wherein the hard coat layer has a film thickness of 2 to 20 µm.

17. The antireflective film according to claim 15, wherein the transparent conductive layer comprises a cured acrylic binder resin including at least one kind of fine particles selected from the group consisting of antimony-doped tin oxide, ZnO, Sb₂O₅, SnO₂, indium tin oxide, and In₂O₃ particles; and
the transparent conductive layer has a thickness of 0.3λ to 0.6λ of light having a wavelength of 550 nm and a refractive index of 1.58 to 1.75 to the light having a wavelength of 550 nm.

18. The antireflective film according to claim 15, wherein the light-absorbing layer comprises a cured acrylic binder resin including at least one kind of fine particles selected from the group consisting of metal oxide particles, metal nitride particles, and carbon particles;
the attenuation coefficient of the light-absorbing layer at light having a wavelength of 550 nm is more than 0.25, and the light-absorbing layer has a thickness of 0.25λ or less of the light having a wavelength of 550 nm.

19. The antireflective film according to claim 15, wherein the attenuation coefficient of the low refractive index layer at light having a wavelength of 550 nm is about zero, and the low refractive index layer has a refractive index of 1.38 to 1.55 to the light having a wavelength of 550 nm.

20. The antireflective film according to claim 15, wherein the surface resistivity is 1.0×10⁸ Ω/square or less and the luminous reflectance is 0.5% or less.
